# DEMANDE DE BREVET EUROPEEN

(11) **EP 4 782 132 A1**
(43) Date de publication de la demande: **29.07.2026**
(21) Numéro de dépôt: 25153626.4
(22) Date de dépôt: 23.01.2025
(51) Int. Cl.: B23B 41/12, B23B 27/06, B23D 5/02, F41A 21/18

(54) **COUTEAUX DE RAYAGE ET PROCEDE DE RAYAGE**

(71) Demandeur: Precicarb SA, 4800 Verviers (BE)
(72) Inventeur: FICARROTTA, Joachim, 4432 Alleur (BE)
(74) Mandataire: AWA Benelux

(57) **Abrégé**

L'invention se rapporte à un jeu de couteaux de rayage (1) destinés à réaliser des rainures hélicoïdales (6) à l'intérieur d'un canon (7) ayant un calibre compris entre 20 et 155 mm, ledit jeu comportant une succession de N à N+x couteaux de rayage (1) munis sur leur pourtour extérieur de dents (2) présentant un profil sinusoïdal (2a,2b), ledit jeu étant caractérisé en ce que le profil sinusoïdal (2a,2b) des dents (2) de chaque couteau de rayage x (1) est déphasé d'un angle φ substantiellement égal à 180° par rapport au profil sinusoïdal (2a,2b) des dents (2) du couteau de rayage x-1 (1).

Elle se rapporte également au procédé de rayage des canons mettant en oeuvre ce jeu de couteaux de rayage et des couteaux conventionnels de finition.

## Description

### Domaine technique de l'invention

La présente invention se rapporte à un jeu de couteaux de rayage destinés à réaliser des rainures hélicoïdales à l'intérieur de canons de tout calibre. Elle se rapporte également au procédé de rayage mettant en oeuvre ce jeu de couteaux.

### Arrière-plan technologique

Les rainures hélicoïdales dans les canons ont pour objet d'imprimer à l'obus un mouvement de rotation afin augmenter sa précision de trajectoire, particulièrement sur les longues portées. Ces rainures sont réalisées à l'aide d'un procédé de rayage qui consiste à pousser ou tirer, tout en tournant, un couteau muni de dentures à l'intérieur du canon. Plus précisément, un premier couteau de rayage est monté sur un outillage d'usinage, appelé mandrin, et tiré ou poussé avec le mouvement de rotation à l'intérieur du canon pour former les rainures. Ensuite, un deuxième couteau de plus grand diamètre est monté sur le mandrin après le démontage du premier couteau pour creuser les rainures et ainsi de suite avec un jeu de couteaux qui peut contenir jusqu'à plus de 60 pièces pour générer totalement la rainure.

A ce jour, on observe pour certaines matières des difficultés ou même un refus de coupe, le couteau ne pénétrant pas aisément dans la matière. Ces difficultés entraînent des ébréchures, voire des casses, du couteau de rayage et par là-même un arrêt de la production.

### Résumé de l'invention

La présente invention vise à fournir des couteaux de rayage ne souffrant pas des inconvénients de l'art antérieur, à savoir des difficultés ou même un refus de coupe pour certaines matières.

Pour ce faire, l'arête de dent lisse traditionnelle de ce type de couteaux est remplacée, dans la première partie du jeu, par une denture au profil ondulé, dite ravageuse. Le profil ondulé des dents d'un couteau est déphasé par rapport au profil ondulé des dents du couteau suivant et ainsi de suite. Cette technique permet de briser le copeau unique habituel en une multitude de copeaux plus petits.

Plus précisément, l'invention se rapporte à un jeu de couteaux de rayage destinés à réaliser des rainures hélicoïdales à l'intérieur d'un canon ayant un calibre compris entre 20 et 155 mm, ledit jeu comportant une succession de N à N+x couteaux de rayage munis sur leur pourtour extérieur de dents présentant un profil sinusoïdal, ledit jeu étant caractérisé en ce que le profil sinusoïdal des dents de chaque couteau de rayage x est déphasé d'un angle φ substantiellement égal à 180° par rapport au profil sinusoïdal des dents du couteau de rayage x-1.

La denture ravageuse en forme d'onde alternative pour deux couteaux successifs permet d'augmenter le pouvoir pénétrant du couteau dans la matière à usiner. Ce type de profil diminue considérablement l'effort de coupe engendré lors du rayage des tubes et permet d'augmenter la cadence de production d'un facteur de l'ordre de 3.

Selon des modes particuliers de l'invention, ledit jeu de couteaux de rayage présente une ou plusieurs des caractéristiques suivantes :
- les couteaux de rayage N à N+x ont un diamètre croissant ;
- les couteaux de rayage N à N+x sont des couteaux circulaires ou des segments de couteaux ;
- il comporte à la suite de la succession des N à N+x couteaux à la denture ravageuse, des couteaux dits de finition munis sur leur pourtour extérieur d'arêtes de dents présentant un profil lisse pour assurer la finition des rayures hélicoïdales.

La présente invention se rapporte également au procédé de rayage mettant en oeuvre ce jeu de couteaux.

Plus précisément, la présente invention se rapporte à un procédé de rayage de rainures hélicoïdales à l'intérieur d'un canon ayant un calibre compris entre 20 et 155 mm, comprenant les étapes successives de :
a) Mise à disposition du jeu de couteaux de rayage tels que décrits précédemment et du canon,
b) Positionnement du couteau de rayage N sur un mandrin et traction ou poussée tout en étant en rotation du couteau de rayage N au sein du canon,
c) Positionnement du couteau de rayage N+1 sur ledit mandrin à la place du couteau de rayage N et traction ou poussée tout en étant en rotation du couteau de rayage N+1 au sein du canon,
d) Répétition de l'étape c) à l'aide des N+x couteaux de rayage.

Selon un mode particulier de l'invention, le procédé présente pour autre caractéristique qu'il comporte à la suite de l'étape d), des étapes de finition de l'état de surface des rainures hélicoïdales réalisées à l'aide des couteaux de finition.

### Brève description des figures

Les figures 1a et 1b représentent deux vues tridimensionnelles d'un couteau de rayage selon l'invention.

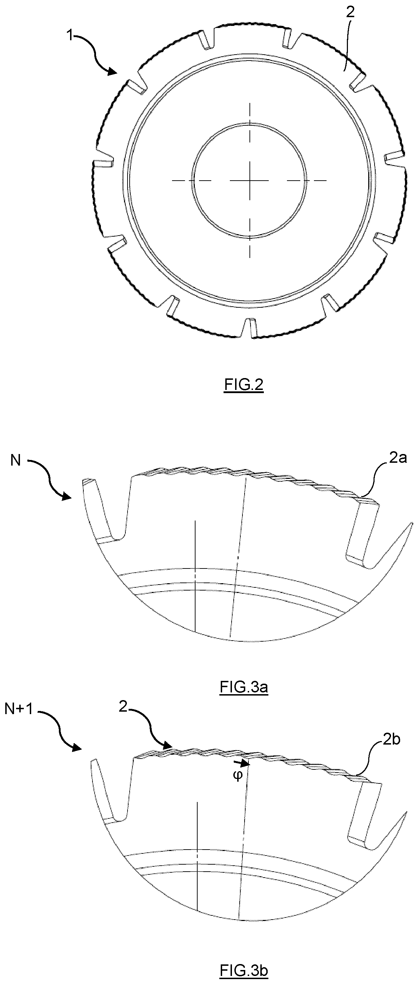

La figure 2 représente la répartition des dents sur le pourtour du couteau de rayage.
Les figures 3a et 3b représentent respectivement une vue partielle d'un premier couteau et d'un deuxième couteau avec un déphasage d'un angle φ entre les profils ondulés des dents des premier et deuxième couteaux successifs.
La figure 4 représente schématiquement les deux profils ondulés des figures 3a et 3b superposés pour mettre en lumière le déphasage d'un angle φ.
La figure 5a est une vue schématique du procédé de rayage avec le canon comprenant sur son pourtour intérieur des rainures hélicoïdales réalisées avec le jeu de couteaux de rayage selon l'invention.
La figure 5b est une vue en coupe et un agrandissement du canon avec les rainures hélicoïdales obtenues avec le jeu de couteaux de rayage selon l'invention.

### Description détaillée de l'invention

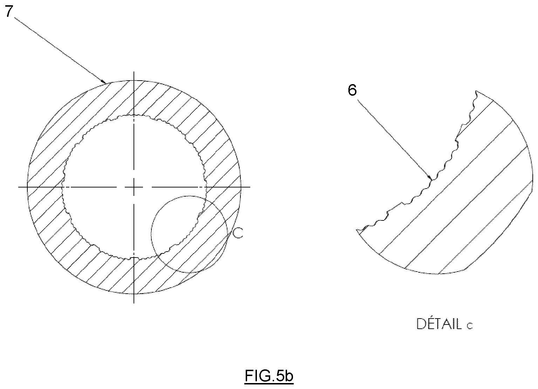

La présente invention se rapporte à un jeu de couteaux de rayage 1 destinés à réaliser des rainures hélicoïdales 6 à l'intérieur d'un canon 7 tel que schématisées à la figure 5b. Selon l'invention, les couteaux de rayage peuvent être des couteaux circulaires c.à.d. des couteaux comportant des dents réparties sur tout leur pourtour extérieur avec par exemple 48 dents, ou des segments de couteaux, c.à.d. des couteaux partiels avec par exemple 2 dents. On notera que le nombre de dents et donc de rainures est déterminé par le fabricant du canon. Ci-après, l'invention sera illustrée pour des couteaux circulaires.

Le jeu de couteaux de rayage comporte des couteaux avec l'arête de dents au profil ondulé, dits couteaux ravageurs, qui font plus spécifiquement l'objet de l'invention et, de manière conventionnelle, des couteaux de finition avec l'arête de dents présentant un profil lisse habituel.

L'invention se rapporte également au procédé de rayage mettant en oeuvre ce jeu de couteaux. Le procédé est adapté pour le rayage de tout canon ayant un calibre compris entre 20 et 155 mm.

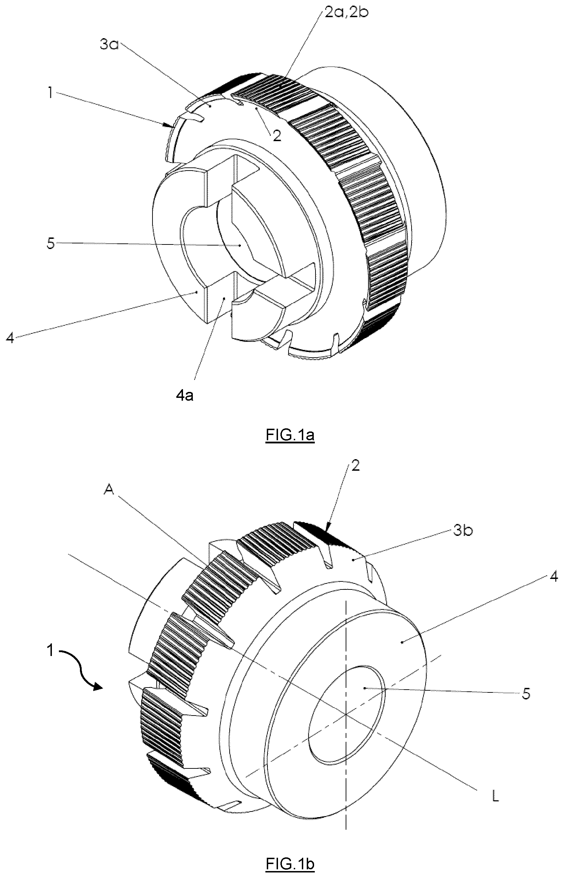

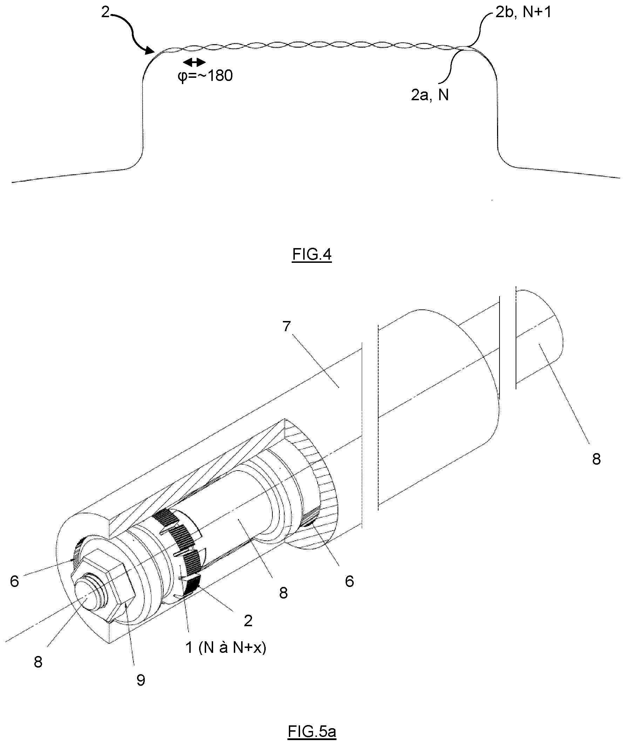

Les couteaux à la denture ravageuse 1 visibles aux figures 1a et 1b comportent sur leur pourtour extérieur des dents 2 avec un profilé ondulé 2a,2b, qu'on peut également qualifier de profil sinusoïdal. De manière conventionnelle, au sein de chaque couteau 1est ménagé un alésage 5 pour le montage sur un mandrin 8 représenté à la figure 5a. Cet alésage 5 peut être encadré par des portées cylindriques 4 dont une est munie de rainures 4a assurant le positionnement correct du couteau sur le mandrin. Le couteau de rayage 1 est muni d'une face d'attaque 3a où les dents 2 sont en prise avec la matière lors de la traction ou de la poussée du couteau au sein du canon. L'axe (A) des sillons et sommets définis par le profil sinusoïdal des dents est incliné par rapport à l'axe longitudinal (L) du couteau de manière à réaliser les rainures hélicoïdales du canon.

Le jeu de couteaux comporte une succession de N à N+x couteaux de rayage avec une denture ravageuse. Généralement, le jeu comporte plusieurs dizaines de couteaux, typiquement plus d'une soixantaine. Selon l'invention, le profil sinusoïdal des dents de chaque couteau de rayage x est déphasé d'un angle φ par rapport au profil sinusoïdal des dents du couteau de rayage x-1. Cet angle φ est substantiellement égal à 180°. On entend par substantiellement que le déphasage peut ne pas être parfaitement précis d'un couteau à l'autre. Le déphasage visé est de 180° avec une marge entre 175° et 185° entre deux couteaux successifs. L'angle φ de déphasage est substantiellement constant pour tout le jeu de couteaux à denture ravageuse avec à nouveau une marge entre 175° et 185°.

Ainsi, le premier couteau N a pour chaque dent un profil ondulé donné, le deuxième couteau N+1 a pour chaque dent un profil ondulé déphasé de l'angle φ par rapport aux dents du premier couteau N, le troisième couteau N+2 a un profil ondulé déphasé de ce même angle φ et présente ainsi un profil ondulé similaire à celui des dents du premier couteau N, les dents du quatrième couteau N+3 ont un profil ondulé déphasé de l'angle φ par rapport à celles du troisième couteau N+2, les dents du cinquième couteau N+4 ont un profil ondulé déphasé de l'angle φ par rapport aux dents du quatrième couteau N+3 et ainsi de suite jusqu'au couteau N+x. Ces couteaux successifs de N à N+x ont un même nombre de dents sur le pourtour extérieur. Ils ont pour différence que le diamètre du couteau est croissant depuis le couteau N jusqu'au couteau N+x afin de creuser au fur et à mesure les rainures hélicoïdales du canon. L'amplitude du profil ondulé est substantiellement la même d'un couteau à un autre avec des valeurs de l'ordre du dixième de millimètre. Généralement, la moitié de la différence d'amplitude entre deux couteaux successifs correspond à l'épaisseur du copeau.

A la suite de ces couteaux à la denture ravageuse, le jeu de couteaux comporte de manière conventionnelle les couteaux de finition (non représentés).

L'invention se rapporte également au procédé de rayage mettant en oeuvre le jeu de couteaux de rayage décrits ci-avant. Le procédé de rayage peut indifféremment être réalisé en poussant le couteau dans le tube du canon ou en tirant le couteau à travers le tube du canon.

Dans une première étape visible schématiquement à la figure 5a, le couteau de rayage N monté sur le mandrin 8, par exemple via un pas de vis (rondelle 9), est poussé ou tiré tout en étant en rotation au sein du canon 7. Dans une deuxième étape, le couteau de rayage N+1 est monté sur le mandrin 8 à la place du couteau de rayage N et poussé ou tiré tout en étant en rotation au sein du canon 7. Le procédé se poursuit ainsi jusqu'au couteau de rayage N+x avec les passages successifs des couteaux de rayage. Ensuite, les couteaux de finition sont montés successivement sur l'outil d'usinage pour assurer la finition des rainures.

## Revendications

1. Jeu de couteaux de rayage (1) destinés à réaliser des rainures hélicoïdales (6) à l'intérieur d'un canon (7) ayant un calibre compris entre 20 et 155 mm, ledit jeu comportant une succession de N à N+x couteaux de rayage (1) munis sur leur pourtour extérieur de dents (2) présentant un profil sinusoïdal (2a,2b), ledit jeu étant **caractérisé en ce que** le profil sinusoïdal (2a,2b) des dents (2) de chaque couteau de rayage x (1) est déphasé d'un angle φ substantiellement égal à 180° par rapport au profil sinusoïdal (2a,2b) des dents (2) du couteau de rayage x-1 (1).

2. Jeu de couteaux de rayage (1) selon la revendication précédente, **caractérisé en ce que** les couteaux de rayage (1) N à N+x ont un diamètre croissant.

3. Jeu de couteaux de rayage (1) selon l'une des revendications précédentes, **caractérisé en ce que** les couteaux de rayage (1) N à N+x sont des couteaux circulaires ou des segments de couteaux.

4. Jeu de couteaux de rayage (1) selon l'une des revendications précédentes, **caractérisé en ce qu'**il comporte à la suite de la succession des N à N+x couteaux à la denture ravageuse (1), des couteaux dits de finition munis sur leur pourtour extérieur d'arêtes de dents (2) présentant un profil lisse pour assurer la finition des rayures hélicoïdales (6).

5. Procédé de rayage de rainures hélicoïdales (6) à l'intérieur d'un canon (7) ayant un calibre compris entre 20 et 155 mm, comprenant les étapes successives de :
a) Mise à disposition du jeu de couteaux de rayage (1) selon l'une des revendications précédentes et du canon (7),
b) Positionnement du couteau de rayage N (1) sur un mandrin (8) et traction ou poussée tout en étant en rotation du couteau de rayage N (1) au sein du canon (7),
c) Positionnement du couteau de rayage N+1 (1) sur ledit mandrin (8) à la place du couteau de rayage N (1) et traction ou poussée tout en étant en rotation du couteau de rayage N+1 (1) au sein du canon (7),
d) Répétition de l'étape c) à l'aide des N+x couteaux de rayage (1).

6. Procédé selon la revendication précédente, **caractérisé en ce qu'**il comporte à la suite de l'étape d), des étapes de finition de l'état de surface des rainures hélicoïdales (6) réalisées à l'aide des couteaux de finition.
